Europäisches Patentamt

European Patent Office

Office européen des brevets

(11) Veröffentlichungsnummer: **0 337 409**
**A2**

## (12) EUROPÄISCHE PATENTANMELDUNG

(21) Anmeldenummer: **89106440.4**

(22) Anmeldetag: **11.04.89**

(51) Int. Cl.⁴: **G01J 5/02**

(30) Priorität: **13.04.88 DE 3812246**

(43) Veröffentlichungstag der Anmeldung:
**18.10.89 Patentblatt 89/42**

(84) Benannte Vertragsstaaten:
**DE FR GB IT**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Schneider, Herbert
Altkönigstrasse 16
D-6390 Usingen(DE)**

(54) **Strahlungsthermometer.**

(57) Es ist Aufgabe der Erfindung, ein Strahlungsthermometer zu schaffen, welches auf optischem Wege
die Temperatur einer Strahlungsquelle (1) erfasst,
wobei im Strahlengang ein Photodetektor (2) angeordnet ist, der ein der Strahlungstemperatur proportionales Signal einer Signalverarbeitung (3) zuleitet,
welche das Signal in einen Temperaturwert umwandelt, und bei welchem der Einfluß von Störstrahlungen minimiert ist.

Im Strahlengang zwischen Strahlungsquelle (1)
und Photodetektor (2) ist eine die Temperatur der
Strahlungsquelle (1) aufweisende Metallschicht (4)
angeordnet.

Strahlungsthermometer zur Messung der Temperaturen von Gasturbinentriebwerken.

EP 0 337 409 A2

## Strahlungsthermometer

Die Erfindung betrifft ein Strahlungsthermometer nach dem Oberbegriff des ersten Anspruchs.

Es sind Strahlungsthermometer bzw. Pyrometer bekannt, welche die Strahlungstemperatur eines zu messenden Gegenstandes auf optischem Wege erfassen. Hierzu wird die betreffende Strahlung einem Temperatursensor z. B. einem Photodetektor zugeführt, der ein der Strahlungstemperatur proportionales elektrisches Signal einer Signalverarbeitung zuleitet, welche dann dieses Signal in einen Temperaturwert umwandelt.

Nachteilig an diesen Strahlungsthermometern ist deren Empfindlichkeit gegenüber Störstrahlung, so daß der Meßwert oftmals verfälscht ist. Desweiteren muß zur thermischen Entkopplung der Temperatursensor weit von der Strahlungsquelle entfernt werden. Außerdem ist eine Verschmutzung des optischen Systems nur schwer zu verhindern.

Der Erfindung liegt die Aufgabe zugrunde, ein Strahlungsthermometer, insbesondere zur Messung von Gastemperaturen, zu schaffen, bei dem der Einfluß von Stör strahlungen minimiert ist. In einer weiteren Ausgestaltung der Erfindung soll der Temperatursensor des Strahlungsthermometers so ausgebildet sein, daß er nahe an der Strahlungsquelle sitzen kann und eine Verschmutzung nahezu ausgeschlossen ist.

Erfindungsgemäß wird die Störstrahlung dadurch minimiert, daß im Strahlengang zwischen Strahlungsquelle und Photodetektor eine die Temperatur der Strahlungsquelle aufweisende Metallschicht angeordnet ist. Aufgrund der im Strahlengang angeordneten Metallschicht kann man von konstanten Emissionsverhältnissen ausgehen. Die Streustrahlung, sei es durch Seitenwände oder Funken, gelangt somit nicht auf den Photodetektor. Die Dicke der Metallschicht ist vorteilhaft so zu wählen, daß eine ausreichend kurze Zeitkonstante für die Temperaturerfassung gegeben ist.

In besonders vorteilhafter Ausführungsform der Erfindung ist die Metallschicht auf einem lichtdurchlässigen Stab aufgebracht, wobei der Stab eine geringe Wärmeleitfähigkeit aufweist. Dies hat den Vorteil, daß der Temperatursensor des Strahlungsthermometers nahe an der Strahlungsquelle sitzen kann und eine Verschmutzung des Temperatursensors nahezu ausgeschlossen ist.

Zweckmäßigerweise ist die Metallschicht auf der zur Strahlungsquelle gewandten Stirnseite des Stabes angeordnet, wobei diese vorteilhafterweise gewölbt ist. Durch diese Wölbung kann die Strahlung leichter auf eine im Strahlengang vor dem Photodetektor angeordnete Lochblende mit optischem Filter fokussiert werden.

Das erfindungsgemäße Strahlungsthermometer ist besonders zur Messung der Temperaturen in Gasturbinentriebwerken geeignet. Hierbei besonders zur Erfassung der Temperatur vor der Arbeitsturbine, wobei dieser Wert einem Turbinenregler zugeführt werden kann.

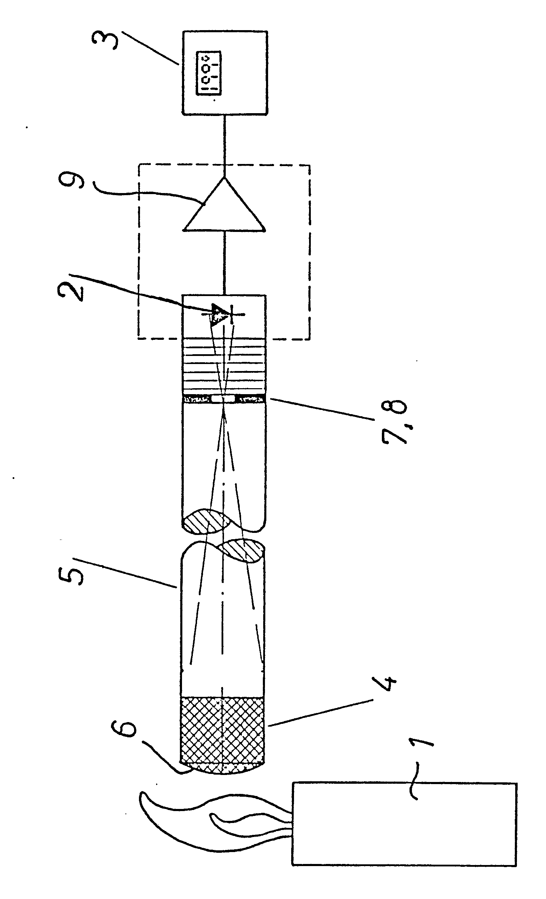

Weitere Merkmale der Erfindung ergeben sich aus der Beschreibung und der Figur, die eine Ausführungsform der Erfindung zeigt und nachfolgend näher erläutert wird.

Die Figur zeigt ein Strahlungsthermometer, welches auf optischem Wege die Temperatur einer Strahlungsquelle 1 erfasst. Die Strahlungsquelle 1 ist hier nur symbolisch dargestellt und kann z. B. die Arbeitsturbine eines Gasturbinentriebwerkes sein. Das Strahlungsthermometer besteht aus einem Temperatursensor, wie einem Photodetektor 2 evtl. integriert mit einem Verstärker 9 und einer Signalverarbeitung 3.

Der Temperatursensor besteht außer dem Photodetektor 2 aus einem lichtdurchlässigen Stab 5, der eine geringe Wärmeleitfähigkeit aufweist, wie z. B. ein Quarz- oder Saphirstab und auf dessen zur Strahlungsquelle 1 gewandten Stirnseite 6 eine Metallschicht 4 aufgedampft ist. Das Aufbringen der Metallschicht kann auch durch andere Verfahren wie z. B. chemische Auftragverfahren oder sputtern geschehen. Im gezeigten Ausführungsbeispiel ist die Metallschicht 4 sowohl auf der Stirnseite 6 als auch auf einem Teil der Längsseite des Stabes 5 aufgedampft. Die zur Strahlungsquelle 1 gewandte Stirnseite 6 des Stabes 5 weist eine Wölbung auf, durch welche die Strahlung auf eine Lochblende 7 und ein optisches Filter 8 fokussiert wird. In Strahlungsrichtung hinter der Lochblende 7 und dem optischen Filter 8 ist der Photodetektor 2, z. B. ein Silicium-Photodetektor, angeordnet Dieser Photodetektor 2 leitet ein der Strahlungstemperatur proportionales Signal über einen Verstärker 9 einer Signalverarbeitung 3 zu, welche das Signal in einen Temperaturwert umwandelt.

Mit diesem erfindungsgemäßen Strahlungsthermometer erhält man konstante und reproduzierbare Strahlungsverhältnisse in Bezug auf die Emissionsfaktoren sowie die Möglichkeit, Gastemperaturen pyrometrisch messen zu können. Die dünne Metallschicht 4 auf dem Stab 5 bewirkt kleine Zeitkonstanten im Vergleich zu Thermoelementen. Der lichtdurchlässige Stab 5 verhindert eine Verschmutzung des optischen Systems. Außerdem kann der Photodetektor 2, bedingt durch die schlechte Wärmeleitung des Stabes 5, relativ dicht an der Strahlungsquelle 1 sitzen. Desweiteren ist durch die Metallschicht eine Beeinflussung des Meßergebnisses durch Störstrahlung praktisch ausgeschaltet.

Das erfindungsgemäße Strahlungsthermometer ist in Gasen, Flüssigkeiten und als Kontaktgeber an festen Stoffen einsetzbar. Der Temperaturbereich hängt von der Wahl eines geeigneten photoempfindlichen Elementes ab.

In bevorzugter Ausführung eignet sich das Strahlungsthermometer zur Erfassung der Temperatur vor der Arbeitsturbine eines Gasturbinentriebwerkes wobei diese dann einem Turbinenregler zugeführt wird.

## Ansprüche

1. Strahlungsthermometer, welches auf optischem Wege die Temperatur einer Strahlungsquelle (1) erfasst, wobei im Strahlengang ein Photodetektor (2) angeordnet ist, der ein der Strahlungstemperatur proportionales Signal einer Signalverarbeitung (3) zuleitet, welche das Signal in einen Temperaturwert umwandelt,
dadurch gekennzeichnet, daß im Strahlengang zwischen Strahlungsquelle (1) und Photodetektor (2) eine die Temperatur der Strahlungsquelle aufweisende Metallschicht (4) angeordnet ist.

2. Strahlungsthermometer nach Anspruch 1,
dadurch gekennzeichnet, daß die Metallschicht (4) auf einem lichtdurchlässigen Stab (5) aufgebracht ist.

3. Strahlungsthermometer nach Anspruch 1 oder 2,
dadurch gekennzeichnet, daß der Stab (5) eine geringe Wärmeleitfähigkeit aufweist.

4. Strahlungsthermometer nach einem der Ansprüche 1 bis 3,
dadurch gekennzeichnet, daß die Metallschicht (4) auf der zur Strahlungsquelle (1) gewandten Stirnseite (6) des Stabes angeordnet ist.

5. Strahlungsthermometer nach Anspruch 4,
dadurch gekennzeichnet, daß die zur Strahlungsquelle (1) gewandte Stirnseite (6) des Stabes (5) gewölbt ist.

6. Strahlungsthermometer nach Anspruch 5,
dadurch gekennzeichnet, daß im Strahlengang eine Lochblende (7) und ein optischer Filter (8) angeordnet sind.

7. Strahlungsthermometer nach einem der Ansprüche 1 bis 6,
dadurch gekennzeichnet, daß das Strahlungsthermometer die Temperatur vor der Arbeitsturbine eines Gasturbinentriebwerks erfasst und einem Turbinenregler zuführt.